# EUROPEAN PATENT APPLICATION

(11) **EP 0 991 282 A1**
(43) Date of publication of application: **05.04.2000**
(21) Application number: 98118548.1
(22) Date of filing: 01.10.1998
(51) Int. Cl.: H04Q 3/00

(54) **Downloading of programs**

(71) Applicant: TELEFONAKTIEBOLAGET LM ERICSSON, 126 25 Stockholm (SE)
(72) Inventor: Witzel, Andreas, 52134 Herzogenrath (DE)
(74) Representative: Mohsler, Gabriele

(57) **Abstract**

The invention relates to a method for optimal and distributed execution of one or more programs, their components or data within communication means of a communication system, especially nodes of an Intelligent Network (IN).
Before a program is executed in a node of a communication network it is checked whether the program and/or data should be distributed and which program or module of a program or data should be distributed.

## Description

The present invention generally relates to a method for optimal and distributed execution of one or more programs or modules thereof within communication means of a communication system, especially nodes of an Intelligent Network (IN).

Apart from the pure exchange of services, e.g. of calls or fax messages, there is an increasing need by users of telecommunication networks for user specific additional services, the so-called value added services, which exceed the normal exchange functionality of networks.

Whereas in the past such services have been proprietary solutions of single network manufacturers or network operators, the introduction of Intelligent Networks in the begin of the 90's for the first time, has brought open interfaces for both network and service providers. This made it possible to offer to users a much larger variety and flexibility of additional services.

The ITU specifications of the Q.1200 series describe the IN standard with help of the IN Conceptual Model (INCM), which is structured into four planes, each abstract views of an IN network: a service plane, a global functional plane, a distributed functional plane and a physical plane.

The distributed functional plane describes the architecture of an IN network in terms of functions and the flows between them, as depicted in Fig.1. Therein the broken line indicates a traffic connection and the other line a signalling connection (this applies also to figures 2 and 3). The functions contain functional entities or data, which are used or accessed by entities on the global functional plane (GFP) (see also Fig. 6). A distributed functional plane (DFP) is described independently of how and where the functions, their functional entities or data are physically implemented in the network.

In principle an IN call, both voice or data, works on the distributed functional plane as follows:

After receiving a call set-up message or a service request message from a user, this can be for instance an "off hook" indicator or the dialling of a number, the call control agent function CCAF passes this message to a call control function CCF and a service switching function SSF. They then process the request message to determine, based on certain criteria and conditions, whether it is a request for IN supported services. If this is the case, the request message will be passed further to a service control function SCF together with related information, e.g. the time the request was detected. The service control function SCF then identifies appropriate service logic, e.g. depending on the type of request, caller or called which is then executed. During the execution of the service, the service control function SCF can interact with a service data function SDF for retrieval of additional data, a service resource function SRF or a so called CCF/SSF (call control function/ service switching function) function to provide a service to a user.

An example for such an IN service is 'call forwarding'. Here the service control function SCF determines to which number a call should be forwarded, signals the result of this to the CCF/SSF function which then directs the call to the new number.
Another example is a speaking clock where the service control function SCF, after being contacted by CCF/SSF, detects that the user wants to know the time of the day. The service control function SCF then signals to the service resource function SRF, which sends the announcement to the user.

It should be noted that the connections between the service control function SCF and CCF/SSF, the service control function SCF and the service data function SDF and the service control function SCF and the service resource function SRF are only signalling connections meaning that via these connections call control signals are carried, but not the call itself.

This shows simple IN calls for which the service control function SCF is contacted only once. However, in most other cases, a service control function SCF, respectively functional entities within a SCF, is contacted multiple times, also during a call. In general, both originating and terminating calls are described within the IN standardisation with so-called call state models describing the sequence and states of a call. Within such a call state model a number of so called Detection Points define what actions have to be performed when certain conditions within a call are reached, i.e. call states at which the processing of the call can be stopped and an external service control function has to be contacted. The service control function then determines e.g. how to continue with the call, executes other software, or interacts with the user or with multiple users. The service control function or one of its functional entities itself usually contact also other functions or functional entities several times, depending on the service or other circumstances.

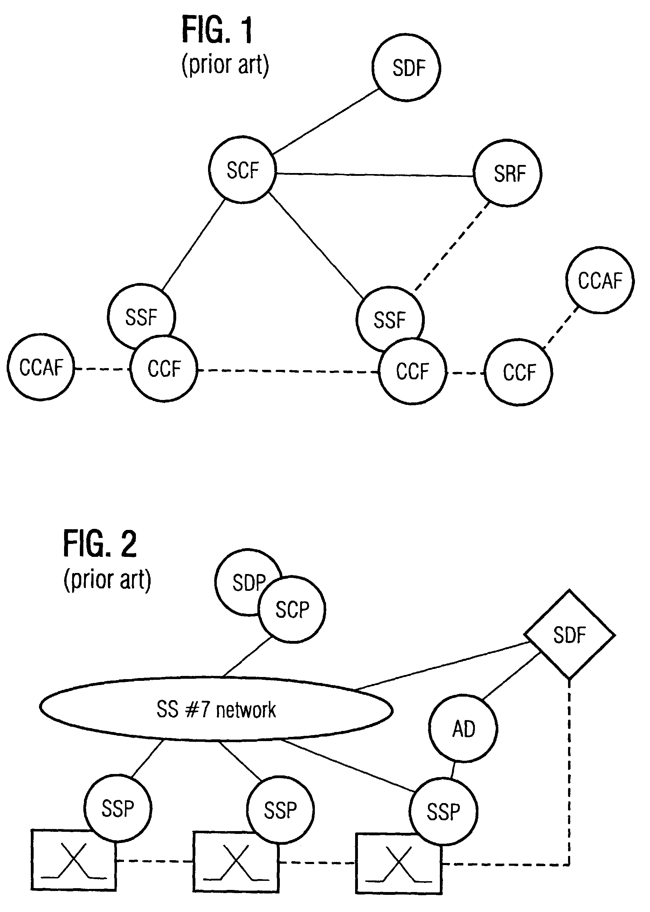

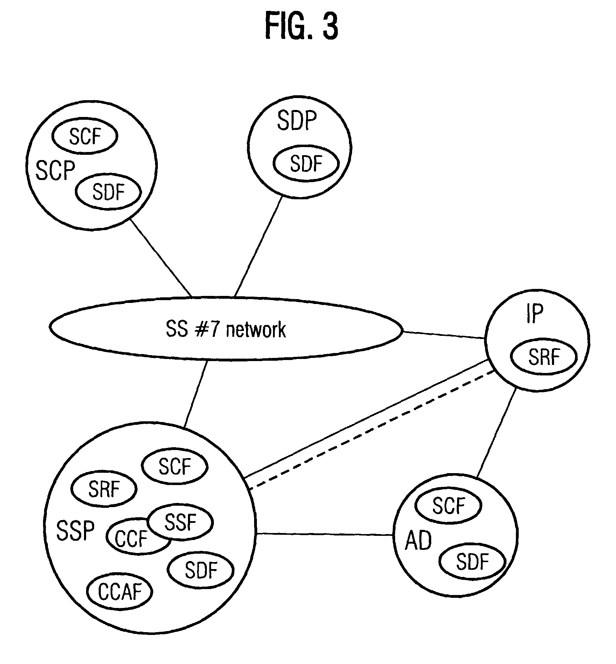

The actual physical implementation of the distributed functional plane is done on a physical plane, shown in Fig. 2. This plane realises the distribution of the described functions, their functional entities and data into several nodes (see also Fig. 3) and the communication between these over the Intelligent Network Application Protocol (INAP) on SS#7, the Signalling System No.7 networks. The architecture of the physical plane looks as follows:

The service switching point SSP is a modified switching node, which is able to detect IN services. The service switching point SSP contains therefore at least CCF/SSF functionality. Optionally, also service resource functions SRF, service data function SDF and service control function SCF functionality can be contained.
The Service Control Point SCP is responsible for service control and is the place for the service control function SCF and service data function SDF functionality. It contains Service Logic Programs SLP and data that are used to execute IN-based services. The service control point SCP can access data in a service data point SDP, which contains service data function SDF functionality, either directly or through a signalling network.
The service data point SDP may be in the same network as the service control point SCP, or in another network.
An Intelligent Peripheral (IP) controls and represents special resources, e.g. digit collection, announcements, voice synthesis or voice recognition. It contains switching matrix to connect users to these resources. It is the place for the service resource function SRF functionality and is controlled by the service control point SCP.
An Adjunct AD physical entity is functionally equivalent to a service control point SCP (i.e. it contains the same functions) but it is directly connected to a service switching point SSP. Communication between the adjunct AD and an service switching point SSP is supported by a high-speed interface, what may result in better performance characteristics. The application layer messages are identical in content to those carried by the signalling network to a service control point SCP.

Another possibility to increase performance is to combine service switching point and service control point SCP to one node service switching control point (SSCP). The connections between the internal functions of the service switching control point node are normally proprietary and closely coupled, but it provides the same service capability as a service switching point and service control point separately. The interfaces between the service switching control point and other nodes on the physical plane are the same as the interfaces between the service switching point and other nodes on the physical plane.

The description of IN services is done in the highest level of the IN conceptual model, the service plane SP. The service plane represents an exclusively service-oriented view and describes the services from the user perspective. This view contains no information regarding the implementation of the services in the network. On the service plane, an IN service is characterised by one or more core service features, and can be optionally enhanced by other service features. A service feature SF1, SF2, ... SF5 is a specific aspect of a service that can also be used in conjunction with other services or service features. It is either a core part of a service or an optional part offered as an enhancement to a service.

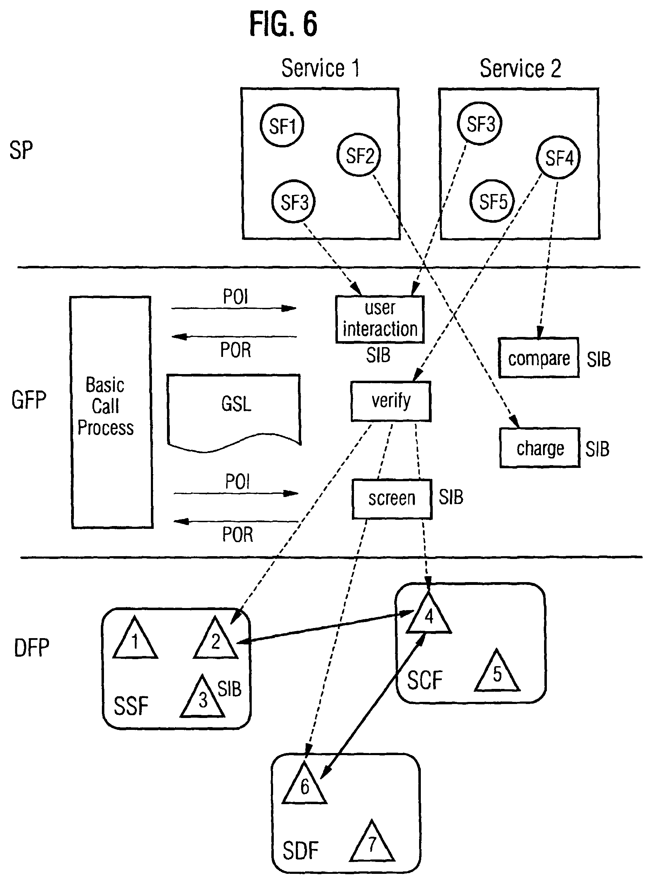

The definition of a service or a service feature is done on a global functional plane GFP, as depicted in Fig. 6
This plane contains units of service functionality, called service independent building blocks, which will be named SIBs in the following, which are described independently from how the functionality is distributed in the network. SIBs are reusable, several IN service features can use i.e. the same SIB. This means also that SIBs are independent of the service or service feature for which they are used. They have also no knowledge about previous or subsequent SIBs that are used to describe the service (feature). In that way, a network operator can define a set of essential SIBs, e.g. SIBs for call handling, charging or user interaction, as shown as an example in the figure. Service providers can then create their services using such predefined SIBs.

Service dependence can be reached by providing the SIBs with data parameters, which enable a SIB to be tailored to perform the desired functionality and which are therefore specified independently for each SIB. Two types of data parameters are required for each SIB, dynamic parameters called call instance data (CID) and static parameters called service support data (SSD).

Call instance data defines dynamic parameters whose value will change with each call.
They are used to specify caller or called specific details like calling or called line information. This data can be either made available from the basic call progress (BCP) SIB, e.g. calling line identification, generated by a SIB, e.g. a translated number or entered by the subscriber, e.g. a dialled number or a PIN code.

Service support data defines data parameters required by a SIB which are specific to the service feature description. When a SIB is included in a global service logic GSL of a service description, the global service logic GSL will specify the service support data values, called SSD for the SIB. SSD consists of fixed parameters. These are data parameters whose values are fixed for all call instances. Further to this SSD consists of field pointers. Field pointers identify which call instance data is required by the SIB, and in doing so provide a logical location for that data.

The actual implementation of the service or service feature is done in a Global Service Logic, the GSL, e.g. a script, which defines the order in which SIBs are chained together and when the SIBs have to be triggered. The steering, invocation or even generation of this GSL is done from a special SIB, the Basic Call Progress (BCP) SIB. This special SIB manages the call process and controls the GSL via points of initiation POI and points of return POR, which provide the interface from the basic call progress to the global service logic. Therefore, the existence of a basic call progress SIB can be seen as mandatory for the execution of IN services.

Some global service logic scripts may be static and not changed during lifetime.
However it is also common that global service logic GSL or parts of it is unique to each individual call and generated dynamically to adapt for instance to the caller or called, global service logic GSL must therefore contain SIBs and a logical connection between the SIBs and input and output data parameters, service support data and call instance data defined for each SIB to tailor the SIBs to the respective service or even dynamically to the current call as described above.

Based upon the functionality of these common elements, the global service logic chains together these elements to provide a specific service.

As shown in Fig. 6, SIBs themselves use or access one or more functional entities or data of the functions, e.g. SCF, SSF, or SDF on the distributed functional plane DFP.
Part of these functions are so called function entities, which are marked as triangles.
Further to this the broken arrow indicates a pointer and the other one shows an information flow.

Intelligent Networks are not only realised in fixed networks but also in mobile communication networks as for instance the Global Network for Mobile communications (GSM). Within GSM, IN concepts have been introduced with the CAMEL (Customised Applications for Mobile network Enhanced Logic) services. The major difference between fixed Intelligent Networks and the CAMEL service in GSM is that in CAMEL the Service Switching Point (SSP) communicates always with the Service Control Point (SCP) of a users home network. An example is a user with the home network in France who is registered at the moment in a network in Norway. In that case, the SSP in Norway would communicate with the SCP in the home network in France.

In summary the IN Conceptual Model, the INCM offers a flexible and implementation independent definition of services using the GSL scripts and SIBs with standardised interfaces without having to know the actual implementation and location.

For instance, SCF functionality can be located in several nodes, SCP, SSP, SSCP or AD. Putting service logic or SIBs into a central SCP makes service creation, updating and management simple. A disadvantage is however, that all messages have to be transported over the SS7 network, a fact which sometimes lead to a high load in the SS7 network and/or even poor service performance because for each signal some time is needed for processing it.
Executing service logic or SIBs directly in service switching control point, called SSCP, service switching point, called SSP, or adjunct, called AD decreases the load in the SS7 network and is usually also faster because the signalling between SSF and SCF is now done within SSCP, SSP or on a proprietary SSP/AP interface. However, this solution has the disadvantage of complex service creation, updating and management and possible introduction of additional signalling to functions which are only located in the SCP.

From the above description it can be derived that the location of functionality and data within an Intelligent Network is crucial for an efficient resource usage and good service performance.

The location of a service script or a SIB or parts of both or a functional entity is normally specified during service creation and usually not changed afterwards.
Especially within CAMEL, a service is always executed in the SCP of the home network of a user. However, the optimal location depends on many influencing factors and is hardly predictable during service creation. As a result of this, service scripts or SIBs or parts of both or functional entities are not optimally located, leading to a higher load of network resources and/or to poor service performance, e.g. due to delayed call set-up, or maybe to extra costs. Particularly the circumstance that in CAMEL SCP and SSP can be located far from each other can lead to very long signalling paths and as a result of this to poor service performance.

A similar problem exists for the location of service relevant data, which is usually managed by the service data function, the SDF. Also SDF functionality can be located in several nodes and an optimal location of data can be crucial for the service performance.

It is therefore object of the invention to provide a method and a system to control the execution of services or programs in a way that both efficient use of resources and sufficient service performance are reached.

The above mentioned problem is solved by a method according to claim 1 and a system according to claim 17.

Essentially, according to one aspect of the invention, the connection, on which the execution of a program is requested, is examined and depending on this, the program or its components and/or data are distributed between several nodes.

According to another aspect of the invention, also data that can not be immediately gained from the connection itself is examined by deriving this data from storage means.

A further aspect of the invention is to collect statistical data about the execution of a program, to store it in said storage means and to use also this data to determine an optimal distribution of program data.

The advantage of the invention is a flexible and adaptive distribution of programs, program components or other data, which leads to an efficient use of network resources and improved service quality. The additional collection and examination of statistical data makes it possible to analyse a chosen distribution, compare it to previous ones and check if the chosen distribution is the best one.

In the following the invention will be further described by means of examples with the help of the figures. The following figures show:
- Fig. 1:: A Distributed Functional Plan (DFP) of an Intelligent Network (IN), depicting the co-operation between various IN functions,
- Fig. 2:: A Physical Plane (PP) of an Intelligent Network outlining the physical entities and their connections,
- Fig. 3:: shows possibilities for the location of functionality of the DFP in the nodes of the PP,

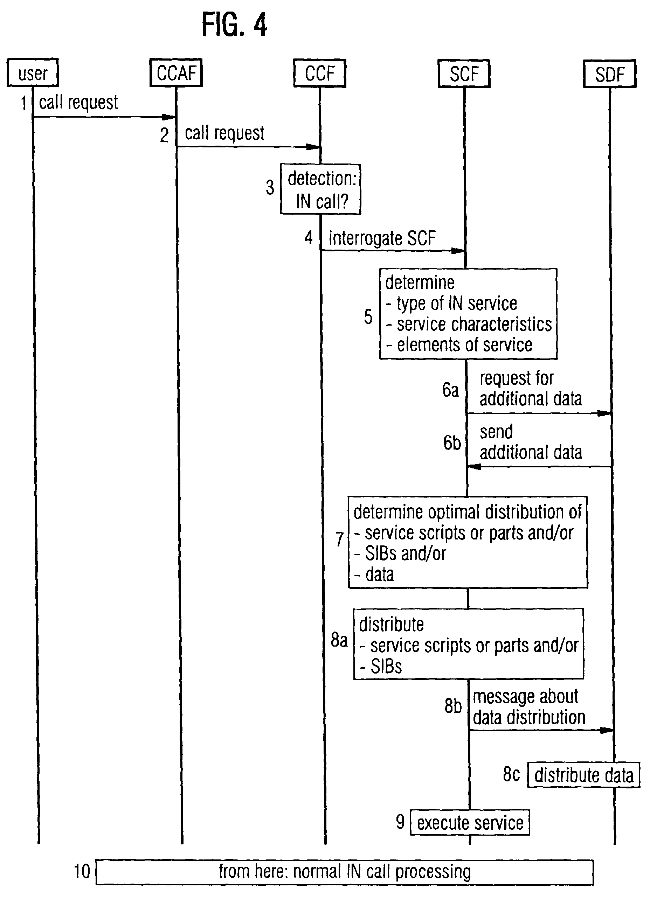

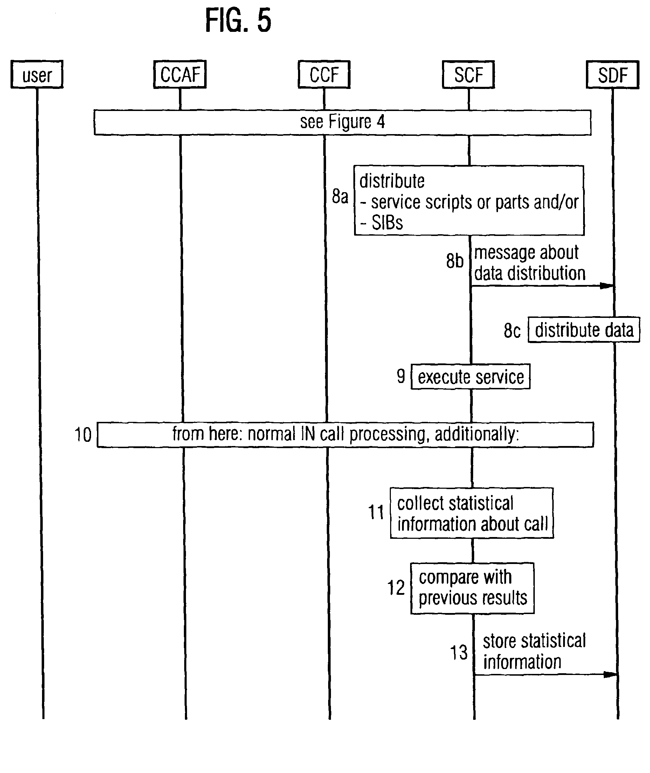

- Fig. 4:: Principal message flow of the invention leading to an optimal distribution of program data,
- Fig. 5:: Principal message flow of the invention with additional evaluation and collection of statistical information,
- Fig. 6:: a general decomposition of an IN service from its description on the service plane to its implementation on the distributed functional plan.

Hereafter, the invention will be further described with reference to a plurality of embodiments.

In the following the invention will be further described according to Fig. 4, which shows a sequence of steps of the invention.

In a first step 1, a user of an Intelligent Network performs an action, which is detected by a call control agent function CCAF. Such an action can be for instance the dialling of a number or going "off-hook". If the user action meets predefined requirements, it is passed in step 2 to a call control function CCF. In other cases, the user action may be handled only by the call control agent function CCAF. The call control function CCF now detects in third step 3 whether the user action needs additional IN services and interrogates a service control function SCF, step 4. In general not all actions need the invocation of IN services. A criterion could be that a special number, e.g. a number beginning with 0800 or 0130 has been dialled or that the number of the caller, the A-number, belongs to a specific person, e.g. a person with specific needs.

The invocation of IN services or continuation of already invoked IN services is also possible during an ongoing call depending on the definition of so-called detection points (DP) that exist for a certain service. In that case, step 1 does not represent an initial user action but for instance a user action for which a detection point has been defined resulting in the interrogation of the service control function SCF.

Before the service control function SCF starts with an execution or continuation of a service, step 9, it determines in step 5 the characteristics of the service and the connection and calculates in step 7 an optimal distribution of the entire service respectively service script or one or more of its components and/or service-related data.
Finally, in step 8a,b,c the service components are distributed and, in the case that also data has to be distributed, a service data function SDF is informed about this in step 8b and distributes the data in step 8c. Afterwards, in step 9, the service is executed.

Basically, the distribution decision can be made in two steps: the first step is to determine whether to distribute at all and the second is how to distribute. The decision can be made for the whole service but also for only an element of it, e.g. part of a script, a SIB or data. In a first iteration it could be checked whether it makes sense at all to distribute a service and in the following iterations it can be decided whether and how the respective elements of a service should be distributed. The decision whether and how to distribute can be based on several factors, which will not all influence the service behaviour equally.

Table 1 is an example for a first iteration in which a decision whether to distribute is taken on a service plane (SP) level:

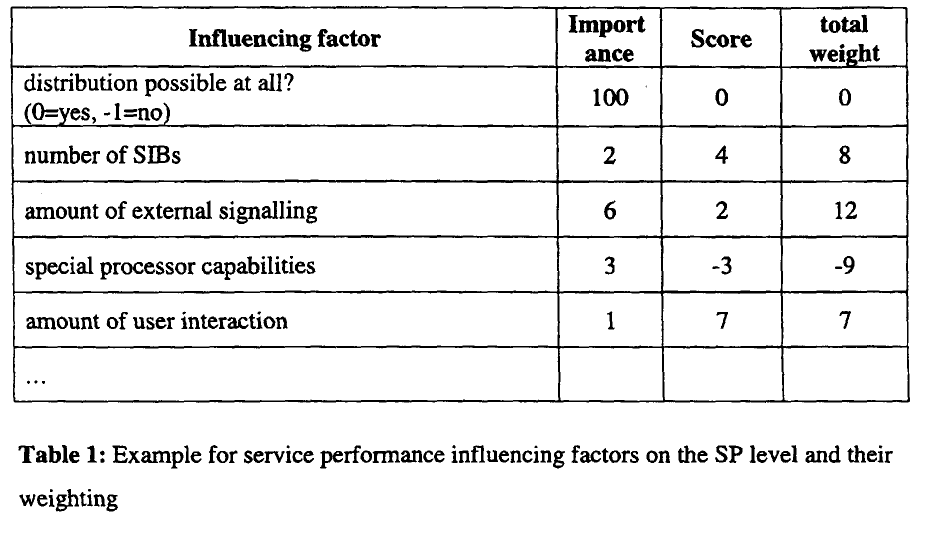

The column 'importance' in this table is an indicator for the influence of a factor: e.g. the factor 'number of service features' is seen as less important than the factor 'amount of internal signalling; The column 'score' depicts the actual height of an influencing factor for a service or component: the 'amount of user interaction' is relatively high while the 'amount of external signalling' is low. Finally, considering both importance and score derives the overall weight of a factor for a service or element. In the example this is done by multiplying both, but also other ways of calculations are possible. Some of the influencing factors on this level can also be derived from other levels. E.g. the item 'amount of signalling' could be derived by putting together the amount of signalling of all elements on the lower levels, e.g. on a global functional plane GFP level.

A criterion to decide upon whether a service should be distributed could be the total weight of all influencing factors. As a result, a decision can be made to distribute a service completely or only a part or parts of it.

This decision, the next iteration, can again be based on an evaluation of influencing factors of the components of a service.

Table 2 shows an example of influencing factors for the distribution of a service script or a part or parts of a service script.

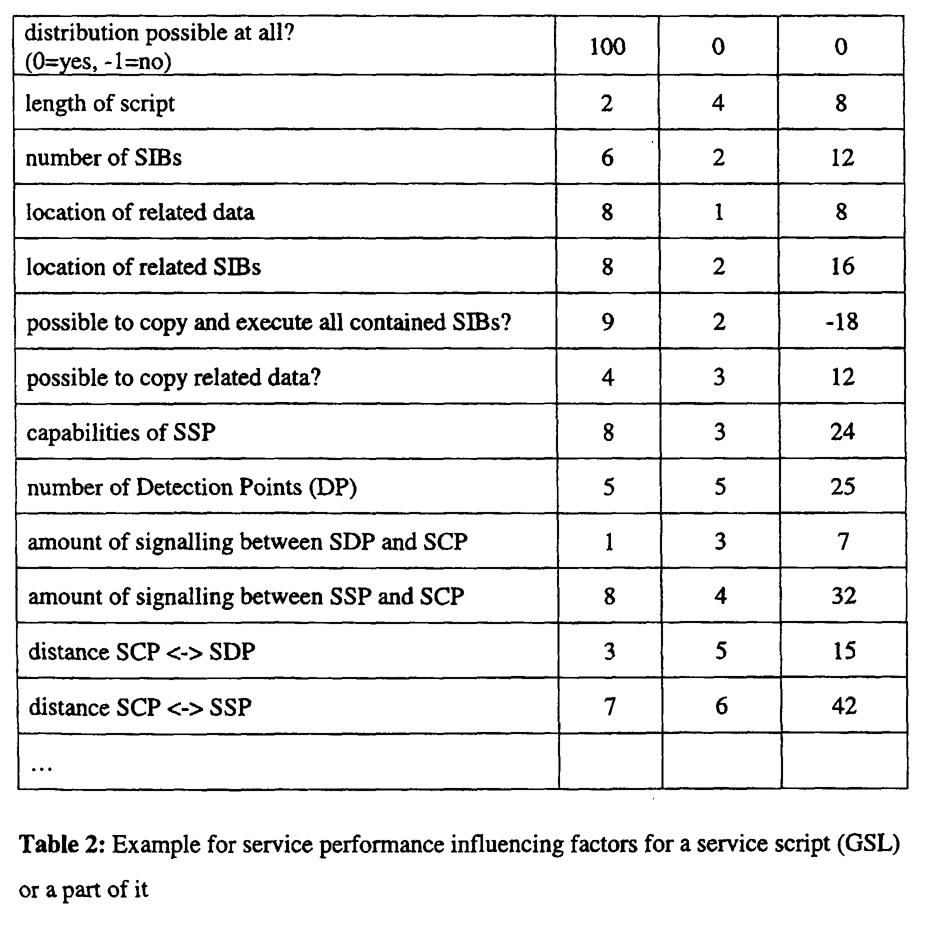

Here it is assumed that the service script is normally completely executed in an external service control point SCP and data has to be retrieved from an external service data point SDP. The normal execution of the service script would lead to a high amount of signalling between the service control point SCP and the service switching point SSP.
Furthermore, the distance between SCP and SSP is also high. It would be therefore useful to distribute the service script, e.g. to download it to the service switching point SSP node. The script can be completely downloaded or only parts of it while the other parts stay in the service control point SCP. Doing the same or a similar iteration for each part of the script then performs the decision what part to download.

Table 3 lists some exemplary influencing factors and how they influence the behaviour of a service. If a service script or a part of it cannot be executed at all in the remote node, here the service switching point SSP, then the service script or the part of it is not downloaded. One possible reason for that could be that the remote node does not have the possibility to execute scripts. Another reason could be that all or some SIBs, which are used by that script, cannot be downloaded and must stay in the service control point SCP what would cause extensive signalling.
In some cases, it could be also forbidden to download a service script or any other element to a remote node, e.g. it could be not allowed to transfer data between a node, e.g. a service switching point SSP or the service data point SDP in one country and another node, e.g. a service control point SCP in another country. In that case it would make sense to download a script or a part of it from the SCP in the one country to the SSP in the other country and execute the script in this country.
Furthermore, influencing factors can indicate whether and what components should be investigated additionally for a possible distribution, If e.g. the amount of signalling between the service control point SCP and the service data point SDP is high, it makes sense to investigate also the distribution of related data.

The score of an influencing factor for a service or element can be stored with the service

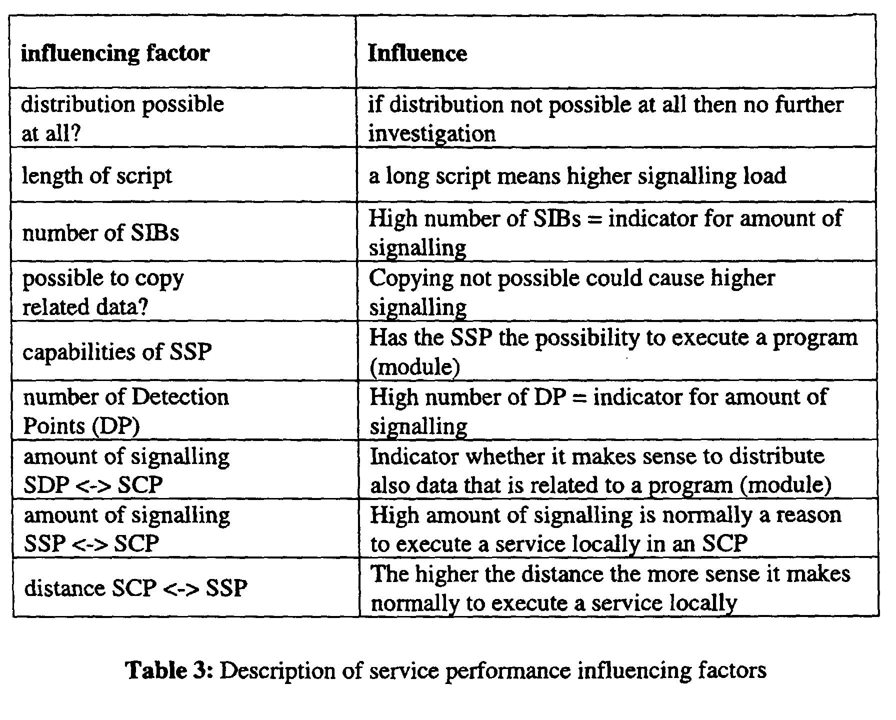

or element, but also derived dynamically when a service is going to be executed. The later derivation is especially useful if a service is not static but depends dynamically on several other circumstances, e.g. on the type of subscriber, the current location of the subscriber, the location, capabilities or load of the serving network node. In some cases it may be temporarily technically not possible, e.g. due to high load in a node, to execute a service or a service component in a remote node. Furthermore, the behaviour of a component, could depend on the type of service it is used for, e.g. a SIB is service independent and becomes service specific through service support data and call instant data.

In a further aspect of the invention it is checked whether the program data exists already in the node to which the program data is supposed to be sent. It is also possible that the program data does nor exist in exactly the same form but is represented or emulated by one or more functions within a communication means. A generic function library or macros could be offered to support a service script, e.g. by providing necessary functions that would have to be downloaded or executed in a remote node otherwise.
The circumstance that some program data is already existing or can be provided/emulated in another node can be used to contribute to the decision whether or not a service should be distributed.
In that case it can be decided not to send the already existing program data to the remote node and relieve in that way the network. However, in other cases it can also make sense to send program data although it is already existing to a node, e.g. to overwrite the already existing program data in case of a newer version or update of this program data.

One more aspect of the invention is to check whether program data, which is needed by program data that is supposed to be distributed to a communication means, exists already in this communication means. It can be checked also, whether it is possible to distribute the needed program data to this communication means or whether functionality exists in this communication means, which corresponds to the needed program data.
In the case that one of the above criteria are not fulfilled it can be decided not to distribute program data or to investigate first whether the needed program data can also be distributed.

One more aspect of the invention is that the data is converted before it is sent to a node.
E.g. every service script is build up of key elements. These key elements are basic logical statements or script flow control statements as known by every ordinary programming language. Since the variety of key elements is limited it is possible to use e.g. one octet to represent one key element. This allows transferring even long and complex service scripts via the interface between two nodes, e.g. a so-called TCAP interface between the service control point SCP and serving switching point SSP. In other cases it may be useful to convert the program data to meet the capabilities of the node to which the program data is supposed to be sent to. E.g. a script could be converted from one language into another language so that a script interpreter in the other node can understand it. Another example is the conversion of data from one data format to another format. A service script could be also enhanced with more powerful instructions and calls to library functions and macros if it can be distributed to and executed in an other node, e.g. the call processing node.

In a further aspect of the invention, besides the analysis of connection oriented data, additional data, which is retrieved from a storing means or by sending a query to a node, is used for the determination of the optimal distribution of data, step 6a,b. Not all information that can be analysed for the determination of the optimal data distribution is immediately available and some information has to be retrieved via additional queries.
This is for instance information about the capabilities of the various nodes, their current load or the current load of the signalling network.

The step after the determination of the optimal distribution of program data is its distribution, i.e. the distribution of program modules in step 8a or data that is needed for or during the execution of a program in step 8b and 8c.

The complexity of the distribution of program modules depends heavily on the number of program modules that have to be distributed and on the layers or planes that are involved. In simple cases only a service script or a part of it has to be distributed. If, for example, a service script does not contain references to SIBs, or if the needed SIBs are also existing in the remote node or if the needed SIBs are supported by function libraries or macros then such a service script can easily be distributed, i.e. downloaded to a remote node, e.g. from the service control point SCP to the service switching point SSP, and executed in this node. In case a service script is downloaded only partly it is possible to interrogate the related node, e.g. the SCP, for further information. By that it is possible to keep extensive service related data within the original node, e.g. the SCP, without having to download that to the remote node, e.g. the SSP. An example for a service script that is downloaded only partly is a service where one part manages user interaction and another part afterwards processes the received data. For such a service it could make sense to download the part which is responsible for the user interaction to the SSP to reduce the signalling to the SCP and leave the part, which processes the data in the SCP.
In more complex cases also SIBs and/or their components are distributed. This is done in the respective planes that handle the SIBs or their components.

In the case that data has to be distributed that is managed by the Service Data Function, a message is sent in step 8b to the Service Data Function which then distributes the data in step 8c.

One more aspect of the invention is the collection of statistical information and storage of this information in a storage means for later use, e.g. for the determination of the optimal distribution of program data, as depicted in Fig. 5, steps 11 - 13.
Often, the score of an influencing factor can not be foreseen because it depends for instance on human behaviour. In such a case, statistical information could be collected during one or more executions of a service by one or more users to derive a typical value for the score of an influencing factor.
In other cases, not all influencing factors or their inter-dependencies are known. This can result in that the optimal distribution can't be derived at all by solving an optimisation problem but has to be gained by empirical investigations. Also here the collection of statistical information can prove whether a selected distribution of program data is optimal regarding a certain performance goal, e.g. low amount of signalling or fast execution or both of it.
It is also possible that the derivation of the optimal distribution of program data is not done before every execution. A reason for this could be that the derivation is time consuming and itself decreases the service performance. In such a case the already stored statistical data can be checked whether it contains the same or a similar scenario, e.g. the same user and the earlier derived program data distribution of this scenario can be chosen. In general, a set of optimal distributions for several scenarios can be hold in the database to shorten the time for the derivation of the optimal distribution.

Typical statistical information could be data about the service itself, the user, the chosen distribution, the amount of signalling to achieve a chosen distribution the amount of signalling during execution, or the execution time.

In step 11, a collection of statistical information is started. The collection can of course also already begin during the distribution decision. In step 13, the statistical information is stored in a storage means, here represented by the service data function SDF.
Additionally, in the intermediate step 12, the current statistical data can be compared with previous statistical data and as a result of this comparison, modified statistical data is stored in the storage means. In that way, it can be achieved that only the statistical data of the so far best distribution is stored in the storage means.

A further aspect of the invention is that the program data which has been distributed between two ore more nodes, e.g. from a service control point SCP to a service switching point SSP, is kept in these nodes after the execution of a service has been finished.
Buffering program data has the advantage that during a following execution of a service such data does not have to be sent again which decreases again the network load when executing a service a second time. To prevent a node from being overflowed by too much program data, it is useful to delete the buffered program data after some time. The decision what buffered program data to delete when can be based again on many criteria, e.g. on its size, how many times it has been used in a certain time period, or how much time has passed since the last use of it.

Although the invention has been mainly described by its usage within an Intelligent Network, it is not restricted to such a network. In general, the invention can be used in all communication networks that allow an execution of programs or the storage of program data in more than one node.

In the following the communication system according to claim 12 will be further described (without figure). A communication system includes at least two communication means. The communication means consists of means for establishing a connection between a first and a second communication means and means for analysing the connection or for analysing connection related data. Further means for sending program data between the two or more communication means of the communication system in dependence of said analysis are provided.

In addition means for checking program data in the communication means are foreseen.

Converting means to convert program data before it is sent are, according to a preferred embodiment part of the means. The same applies to storage means to store collected statistical data, which may be evaluated and stored afterwards.

As an example the first communication means is a service switching point and the second communication means is a Service Control Point in an Intelligent Network (IN).

## Claims

1. Method for executing a program in a communication system, comprising the steps of
- establishing a connection between a first and a second communication means of the communication system,
- analysing the connection or connection related data and
- sending program data between at least two communication means of the communication network in dependence of said analysis.

2. Method according to claim 1, wherein,
before sending said program data between said communication means it is checked whether said program data already exists in a communication means to which said program data is supposed to be sent or whether a communication means contains functionality which corresponds to said program data.

3. Method according to claim 1, wherein,
before sending first program data to a first communication means it is checked whether second program data that is needed by said first program data already exists in or can be distributed to a second communication means to which said first program data is supposed to be sent or whether said second communication means contains functionality which corresponds to said second program data.

4. Method according to one of the claims 1 to 3, wherein
the program data is converted before it is sent to one or more communication means.

5. Method according to one of the claims 1 to 4, wherein
in addition to the analysis of connection related data, additional data is retrieved and analysed.

6. Method according to one of the previous claims, wherein
the program data are components of one or more programs.

7. Method according to one of the previous claims, wherein
with help of the received program data a program is executed in the respective communication means.

8. Method according to claim 7, wherein
a program which is executed in one of said communication means establishes a connection to another communication means and that via this connection program related data is transmitted.

9. Method according to claim 5, wherein
statistical data is collected and stored in storage means.

10. Method according to one of the previous claims, wherein
after sending of program data to one or more communication means and after execution of a program with help of said program data, said program data is kept in said communication means.

11. Method according to claim 9, wherein
the connection related data is data about one or more users of the communication network.

12. A communication system including at least two communication means with means for establishing a connection between a first and a second communication means;
means for analysing the connection or connection related data;
means for sending program data between two or more communication means of the communication network in dependence of said analysis.

13. A communication system according to claim 12, with means for checking program data in a communication means.

14. A communication system according to claim 12 or 13, with converting means to convert program data before it is sent.

15. A communication system according to one of the claims 12 to 14, with storage means to store collected statistical data

16. A communication system according to one of the claims 12 to 15, wherein said communication nodes are nodes of an intelligent Network (IN).

17. A communication system according to one of this claims 12 to 16, wherein the first communication means is a Service Switching Point (SSP) and the second communication means is a Service Control Point (SCP) in an Intelligent Network (IN).

18. A communication system according to one of this claims 12 to 17, wherein the program data is part of a service script or a service script or a Service Independent Building Block (SIB) or data which is needed for execution of a service.
